# EUROPEAN PATENT SPECIFICATION

(11) **EP 1 940 599 B1**
(45) Date of publication and mention of the grant of the patent: **05.12.2018**
(21) Application number: 06806378.3
(22) Date of filing: 18.10.2006
(51) Int. Cl.: B29B 9/06, B29B 9/12

(54) **PROCESS FOR THE CUTTING OF THERMOPLASTIC POLYMERS DOWNSTREAM OF A WATER-RING DIE**
VERFAHREN ZUM ABSCHNEIDEN VON THERMOPLASTISCHEN POLYMEREN STROMABWÄRTS VON EINER WASSERRINGDÜSE
PROCÉDÉ DE DÉCOUPE DE POLYMÈRES THERMOPLASTIQUES EN AVAL D'UNE FILIÈRE À ANNEAU D'EAU

(30) Priority: 27.10.2005 IT MI20052054
(43) Date of publication of application: 09.07.2008
(73) Proprietor: versalis S.p.A., 20097 San Donato Milanese (MI) (IT)
(72) Inventor: CASALINI, Alessandro, I-46100 Mantova (IT); SAIU, Maurizio, I-46100 Mantova (IT); PASQUALI, Francesco, I-37100 Verona (IT); FERRI, Dino, I-37067 Valeggio Sul Mincio-Verona (IT)
(74) Representative: Bottero, Carlo
(86) International application number: PCT/EP2006/010065
(87) International publication number: WO 2007/048536

(56) References cited:
- EP-A- 0 302 621
- US-A- 3 949 039
- US-A- 4 327 050
- US-A1- 2005 110 182
- US-B1- 6 706 396

## Description

The present invention relates to a process for the cutting of thermoplastic polymers downstream of a water-ring die.

More specifically, the present invention relates to a process for the production of substantially cylindrical pellets of thermoplastic polymers leaving a water-ring extrusion die.

Even more specifically, the present invention relates to a process for the production of substantially cylindrical pellets of vinyl-aromatic (co)polymers, for example, polystyrene, high impact polystyrene, SAN copolymers, ABS copolymers, leaving a water-ring extrusion die according to the "water-ring" technology.

Thermoplastic polymers in general are products in the form of pellets whose shape depends on the cutting technology used. In the specific case of vinyl-aromatic polymers, such as styrene polymers, due methods are generally used, known as "spaghetti cutting" and "water-ring cutting", respectively.

According to the spaghetti cutting method, the molten polymer is continuously discharged from a die, forms continuous filaments of polymer which, entrained by gears, are cooled in a water tank and are then cut at a low temperature by rotating knives.

According to the other water-ring cutting method, the granules are "fired" by high-speed rotating knives in a water-ring circuit separated from the cutting head. Examples of scientific literature which describe the two methods are: "Pelletizing: Choosing an Appropriate Method", Plastic Additives & Compounding, July/August 2005, page 22; and the patents USA 3,207,818; 4,245,972; 4 327 050; 4, 846, 644; 4,978,288; 5,215,763; 6,551,087.

The preferred method, from the point of view of handling and also with respect to the investment and maintenance costs, is the so-called "water-ring" technology. With this technique, in fact, the die is not in direct contact with the water; the restarting of the production plant, in the case of short stops, is much simpler as it is much easier to keep the polymer in the molten state; furthermore during the start-ups, the polymer is not handled directly by the operators and the fact of effecting the cutting on molten and not consolidated polymer, greatly reduces the noise.

Finally, it should be pointed out that in the water-ring pelletizing system, the overall cutting device is much more compact and is also presented as a "closed" system so that the presence of vapours, residual monomers and possible additives in the environment can be more easily controlled.

Due to their rounded geometry, basically spherical, or however free of sharp edges, the pellets produced with the water-ring system are subject to friction to a much lesser degree, with respect to the pellets having a cylindrical geometry obtained with spaghetti cutting, and also therefore their tendency to break in the pneumatic transportation phases present downstream of the production. An immediate consequence of this phenomenon is the relatively low quantity of powder formed by disgregation of the pellet itself. It can be easily understood that the presence of powder causes problems of production loss when separated, and inconveniences for the final client, when not separated.

The use of water-ring systems in the cutting of thermoplastic styrene polymers, which, as can be seen, has numerous advantages, is limited however by the potentially negative impact of the rounded pellets on the most widespread transformation processes, i.e. those using screws for the plasticization of the polymer, such as, for example, extrusion and injection moulding. Due to their geometry, in fact, this type of pellet reduces the generation of friction heat in the plasticization phase causing problems relating to production potentiality and stability.

With reference, for example, to injection moulding, this series of phenomena leads to an increase in the dosing time which is jeopardizing especially in fast injection molding. An indirect verification of this behaviour, but more generally of a correct feeding to the plasticization screw, is also provided by the determination of the "rest angle", calculated according to the method ASTM C 1444-00, which is representative of the flow of a mass of pellets beneath their own weight. Rounded pellets normally have a value of 20-32.5°, whereas cylindrical pellets, for example those coming from spaghetti cutting, 35-45°.

The Applicant has now found that by suitably modifying the diameter of the die holes, the rate and number of knives and flow-rate per single hole, it is possible however to obtain a substantially cylindrically-shaped pellet also with a water-ring cutting system.

The pellet thus produced has, in the feeding area to the plasticization screws, a behaviour which is completely analogous to that obtained by the pellet obtained with spaghetti cutting. The pellet thus obtained has a rest angle value ranging from 35° to 45°, and therefore within the typical range of spaghetti cut cylindrical pellets. As envisaged therefore, the content of powder produced by friction in the pneumatic transportations is considerably reduced for the pellet thus obtained.

US patent No. 6,255,395 discloses the water-ring cutting of a masterbatch including a resin having a R&B softening point and a carrier polymer having a peak melting temperature up to about 20°C greater than the R&B softening point of the resin.

The object of the present invention therefore relates to a process for the cutting of thermoplastic vinyl-aromatic (co)polymers with substantially cylindrical-shaped pellets downstream of a water-ring die which comprises:
a. feeding a polymer in the molten state, for example produced by a single- or twin-screw extruder or by a polymerization plant, to a water-ring die;
b. extruding the polymer through the die to obtain a substantially cylindrical pellet having a length/diameter ratio ranging from 1.3 to 2 and a diameter (base) ranging from 2 to 3.2 mm;
b'. firing the pellets by high-speed rotating knives into a water-ring circuit separated from the cutting head;
   wherein
c. the flow-rate of the molten polymer per hole of the die is such as to give a (pellet number)/gram ratio ranging from 25 to 70 gr⁻¹; and
d. the time between two cuttings, referring to the same hole, ranges from 5.10⁻³ to 2.10⁻² seconds.

The pellet must be rapidly cooled as soon as it has been cut, by immersion in water at a temperature lower than 50°C. For this reason, the temperature of the water at the inlet of the water-ring is below 50°C.

According to the present invention, what is specified above in points (c) and (d), is obtained with flow-rates per hole ranging from 4 to 20 kg/h, with a diameter of the die holes ranging from 1.5 to 3 mm and a temperature of the polymer in correspondence with the die generally ranging from 200 to 260°C. The result of this is that with respect to the conventional water-ring cutting, cuts are obtained with a more reduced diameter of the die holes and therefore a greater number of holes to contain the pressure drops through the die and a reduced number of knives.

Any thermoplastic polymer can be subjected to the cutting process, object of the present invention, even if vinyl-aromatic polymers and copolymers are preferred. According to the present invention, the vinyl-aromatic (co)polymer preferably has a weight average molecular weight ranging from 50,000 to 500,000 and can be obtained by polymerizing at least one vinyl-aromatic monomer which corresponds to the following general formula: 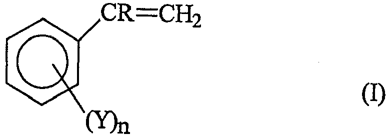 wherein n is zero or an integer ranging from 1 to 5, Y is a halogen, such as chlorine or bromine, or an alkyl or alkoxyl radical having from 1 to 4 carbon atoms and R represents a C₁-C₄ alkyl group.

Examples of vinyl-aromatic monomers having the general formula identified above are: styrene, methylstyrene, ethylstyrene, butylstyrene, dimethylstyrene, α-methylstyrene, α-ethylstyrene, mono-, di-, tri-, tetra-, and penta-chlorostyrene, bromostyrene, methoxystyrene, acetoxystyrene, etc. The preferred vinyl-aromatic monomer is styrene.

The term "vinyl-aromatic monomer", according to the present invention, implies that the vinyl-aromatic monomers having general formula (I) can be used alone or in a mixture of up to 50% by weight with other copolymerizable monomers. Examples of these monomers are (meth)acrylic acid, C₁-C₄ alkyl esters of (meth)acrylic acid, such as methyl acrylate, methylmethacrylate, ethyl acrylate, ethylmethacrylate, isopropyl acrylate, butyl acrylate, amides and nitriles of (meth)acrylic acid such as acrylamide, methacrylamide, acrylonitrile, methacrylonitrile, butadiene, ethylene, divinyl benzene, maleic anhydride, etc. Preferred copolymerizable monomers are acrylonitrile and methylmethacrylate.

The definition of vinyl-aromatic (co)polymers includes polymers obtained by polymerizing the above monomers in the presence of unsaturated rubbers. Examples of unsaturated rubbers are polybutadiene, polyisoprene or monomodal or bimodal, linear or radial, block rubbers, containing, for example, from 50 to 90% by weight of butadiene.

The pellets obtained with the conditions described above have rest angles comparable with those of the pellets obtained from spaghetti cutting (35°-45°). In the feeding to the plasticization screw, the cylinderized pellet, obtained with the process, object of the present invention, does not have the complex feeding problems frequently observed with spheroidal pellets obtained with the traditional water-ring system, where cutting parameters exceeding those cited above, are used.

Another characteristic of the cylinderized pellets of the present invention is that they produce very little powder in the pneumatic transportation lines. As can be seen from the enclosed examples, the pellet does not have cracks or live edges.

A further characteristic is the appearance, at least for SAN pellets and polystyrene homopolymer pellets. The shape of the pellets obtained with the water-ring system is more regular and smoother. This characteristic enhances the visible appearance of the pellets which are considered pleasanter than those obtained with traditional cutting. The cylinderized pellets are in fact practically transparent also in the axial direction and this produces a greater number of luminous or black spots whereas the pellets obtained with traditional cutting, as they have a much larger surface obtained from fragile breaking, disperse the light uniformly on the whole surface making them seem much greyer than they actually are.

The present invention is now better described with reference to the following examples which represent an illustrative and non-limiting embodiment.

### EXAMPLE 1

A polystyrene homopolymer, EDISTIR N 2560 of the Applicant produced with the continuous mass polymerization technology, is fed directly to a Bandera twin-screw extruder operating with a screw-bottom temperature of 225°C, equipped with two cutting knives which rotate at 2200 rpm and a diameter of the die holes of 1.8 mm.

The extrusion and cutting of the polymer is carried out with a flow-rate per hole, Q, of 7 kg/h, a cutting water temperature of 40°C, a polymer temperature of 225°C. At the end of the extrusion and cutting, cylindrical pellets are obtained, having the following characteristics:

| | |
|---|---|
| Diameter of pellets (D) | 2.8 mm |
| Length of pellets (L) | 4.5 mm |
| Aspect ratio (L/D) | 1.6 |
| Pellets/gr | 38 gr⁻¹ |
| Rest angle | 36° |
| Apparent density | 650 Kg/m³ |

### EXAMPLE 2

A polystyrene homopolymer, EDISTIR N 1840 of the Applicant produced with the continuous mass polymerization technology, is fed directly to a Bandera twin-screw extruder operating with a screw-bottom temperature of 205°C, equipped with three cutting knives which rotate at 2250 rpm and a diameter of the die holes of 1.8 mm.

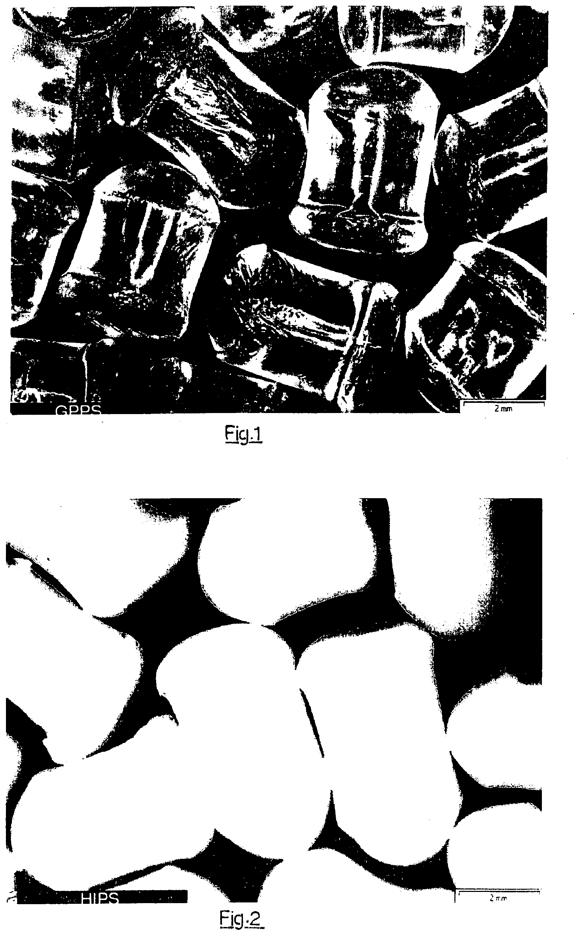

The extrusion and cutting of the polymer is carried out with a flow-rate per hole, Q, of 11.8 kg/h, a cutting water temperature of 40°C, a polymer temperature of 205°C. At the end of the extrusion and cutting, pellets are obtained, illustrated in Figure 1, having the following characteristics:

| | |
|---|---|
| D pellets | 3 mm |
| L pellets | 4.2 mm |
| Aspect ratio | 1.4 |
| Pellets/gr | 34 gr⁻¹ |
| Rest angle | 37.5° |
| Apparent density | 640 Kg/m³ |

### EXAMPLE 3

A high impact polystyrene, EDISTIR ICE PDR 835 D of the Applicant produced with the continuous mass polymerization technology, is fed directly downstream of a polymerization line, operating with a temperature of the polymer in the feeding to the cutting group equal to about 240°C. The cutting group is equipped with 4 knives which rotate at 1600 rpm and with a diameter of the die holes of 2.8 mm.

The extrusion and cutting of the polymer is carried out with a flow-rate per hole, Q, of 12.8 kg/h, a cutting water temperature of 45°C, a polymer temperature of 240°C. At the end of the extrusion and cutting, cylindrical pellets are obtained, illustrated in Figure 2, having the following characteristics:

| | |
|---|---|
| D pellets | 3.0 mm |
| L pellets | 5.3 mm |
| Aspect ratio | 1.7 |
| Rest angle | 42.5° |
| Pellets/gr | 31 gr⁻¹ |

### EXAMPLE 4

An ABS, Sinkral B 432/E of the Applicant produced with the continuous mass polymerization technology, is fed directly downstream of a polymerization line, operating with a temperature of the polymer in the feeding to the cutting group equal to about 250°C. The cutting group is equipped with 4 knives which rotate at 1500 rpm and with a diameter of the die holes of 2.8 mm.

The extrusion and cutting of the polymer is carried out with a flow-rate per hole, Q, of 12 kg/h, a cutting water temperature of 45°C, a polymer temperature of 250°C. At the end of the extrusion and cutting, cylindrical pellets are obtained, having the following characteristics:

| | |
|---|---|
| D pellets | 3.1 mm |
| L pellets | 4.6 mm |
| Aspect ratio | 1.5 |
| Pellets/gr | 30 gr⁻¹ |

## Claims

1. A process for the cutting of thermoplastic vinyl-aromatic (co)polymers with substantially cylindrical-shaped pellets downstream of a water-ring die which comprises:
a. feeding a polymer in the molten state, for example produced by a single- or twin-screw extruder or by a polymerization plant, to a water-ring die;
b. extruding the polymer through the die to obtain a substantially cylindrical pellet having a length/diameter ratio ranging from 1.3 to 2 and a diameter (base) ranging from 2 to 3.2 mm
b'. firing the pellets by high-speed rotating knives into a water-ring circuit separated from the cutting head; wherein
c. the flow-rate of the molten polymer per hole of the die is such as to give a (pellet number)/gram ratio ranging from 25 to 70 gr⁻¹; and
d. the time between two cuttings, referring to the same hole, ranges from 5.10⁻³ to 2.10⁻² seconds.

2. The process according to claim 1, wherein the flow-rate of the polymer per hole ranges from 4 to 20 kg/h.

3. The process according to claim 1 or 2, wherein the pellet is rapidly cooled as soon as it has been cut, by immersion in water at a temperature lower than 50°C.

4. The process according to any of the previous claims, wherein the temperature of the molten polymer in correspondence with the die ranges from 200 to 260°C.

5. The process according to any of the previous claims, wherein the diameter of the die holes ranges from 1.5 to 3 mm.

## Patentansprüche

1. Verfahren für das Schneiden thermoplastischer Vinyl-aromatischer (Co)polymere mit im Wesentlichen zylindrisch geformten Pellets stromabwärts einer Wasserringdüse, welches umfasst:
a. Einspeisen eines Polymers in geschmolzenen Zustand, beispielsweise erzeugt durch einen Einschrauben- oder Zweischrauben-Extruder oder durch eine Polymerisierungsvorrichtung, zu einer Wasserringdüse;
b. Extrudieren des Polymers durch die Düse, um ein im Wesentlichen zylindrisches Pellet zu erhalten mit einem Längen-/Durchmesser-Verhältnis in einem Bereich von 1,3 bis 2 und einem Durchmesser (Basis) in einem Bereich von 2 bis 3,2 mm
b'. Feuern der Pellets durch Hochgeschwindigkeits-Rotier-Messer in einen Wasserringkreislauf, abgetrennt von dem Schneidekopf, worin
c. die Flussrate des geschmolzenen Polymers pro Düsenloch derart ist, dass ein (Pelletzahl)/Gramm-Verhältnis in einem Bereich von 25 bis 70 gr⁻¹ erreicht wird; und d. die Zeit zwischen zwei Schnitten, bezogen auf das gleiche Loch, liegt in einem Bereich von 5,10⁻³ bis 2,10⁻² Sekunden.

2. Verfahren nach Anspruch 1, worin die Flussrate des Polymers pro Loch in einem Bereich von 4 bis 20 kg/h liegt.

3. Verfahren nach Anspruch 1 oder 2, worin das Pellet schnell abgekühlt wird, sobald es geschnitten wurde, durch Eintauchen in Wasser bei einer Temperatur geringer als 50°C.

4. Verfahren nach irgendeinem der vorhergehenden Ansprüche, worin die Temperatur des geschmolzenen Polymers, entsprechend der Düse, in einem Bereich von 200 bis 260°C liegt.

5. Verfahren nach irgendeinem der vorhergehenden Ansprüche, worin der Durchmesser der Düsenlöcher in einem Bereich von 1,5 bis 3 mm liegt.

## Revendications

1. Procédé destiné à la coupe de (co)polymères thermoplastiques vinylaromatiques en granulés de forme essentiellement cylindrique à la sortie d'une filière à anneau d'eau, lequel procédé comprend les étapes suivantes :
a. introduire un polymère à l'état fondu, produit par exemple par une extrudeuse à une vis ou à deux vis, ou par un équipement de polymérisation, dans une filière à anneau d'eau,
b. extruder le polymère à travers la filière de manière à obtenir un granulé essentiellement cylindrique dont le rapport de longueur à diamètre vaut de 1,3 à 2 et le diamètre (de base) vaut de 2 à 3,2 mm,
b'. griller les granulés au moyen de couteaux en rotation à vitesse élevée, dans un circuit à anneau d'eau distinct de la tête de coupe,
étant entendu que
c. le débit de polymère fondu par orifice de filière est tel qu'il permet d'obtenir un nombre de granulés par gramme compris dans l'intervalle allant de 25 à 70 gr⁻¹,
d. et l'intervalle de temps entre deux coupes associées à un même orifice vaut de 5.10⁻³ à 2.10⁻² secondes.

2. Procédé conforme à la revendication 1, dans lequel le débit de polymère par orifice est compris dans l'intervalle allant de 4 à 20 kg/h.

3. Procédé conforme à la revendication 1 ou la revendication 2, dans lequel on fait refroidir rapidement le granulé dès qu'il a été coupé, par immersion dans de l'eau à une température inférieure à 50 °C.

4. Procédé conforme à n'importe laquelle des revendications précédentes, dans lequel la température du polymère fondu au niveau de la filière est comprise dans l'intervalle allant de 200 °C à 260 °C.

5. Procédé conforme à n'importe laquelle des revendications précédentes, dans lequel le diamètre des orifices de filière est compris dans l'intervalle allant de 1,5 à 3 mm.
